# EUROPÄISCHE PATENTSCHRIFT

(11) **EP 1 918 140 B1**
(45) Veröffentlichungstag und Bekanntmachung des Hinweises auf die Patenterteilung: **29.05.2013**
(21) Anmeldenummer: 07118580.5
(22) Anmeldetag: 16.10.2007
(51) Int. Cl.: B60J 5/04

(54) **Fahrzeugtürsystem mit zwei Fahrzeugtüren**
Vehicle door system with two vehicle doors
Système de véhicule avec deux portes de véhicule

(30) Priorität: 31.10.2006 DE 102006051303
(43) Veröffentlichungstag der Anmeldung: 07.05.2008
(73) Patentinhaber: Ford Global Technologies, LLC, Dearborn, MI 48126 (US)
(72) Erfinder: Benderoth, Thomas, 51647 Gummersbach (DE); Klein, Gerhard, 50259 Pulheim (DE); Vukovic, Elvir, 50733 Köln (DE); Hilmann, Jörgen, 51375 Leverkusen (DE); Lopes dos Santos, Armando, 50737 Köln (DE); Bickenbach, Michael, 50823 Köln (DE); Staines, Brad, London, Greater London E2 8NA (GB); Pooloo, Issa, Brentwood, Essex CM13 3BX (GB)
(74) Vertreter: Dörfler, Thomas

(56) Entgegenhaltungen:
- EP-A- 0 540 053
- DE-A1- 10 119 131
- FR-A- 2 418 111
- JP-A- 57 041 209
- US-A- 3 887 227

## Beschreibung

Die Erfindung betrifft ein Fahrzeugtürsystem mit zwei Fahrzeugtüren nach dem Oberbegriff des Anspruchs 1.

Das Dokument JP 57-41209 offenbart den Oberbegriff des Anspruchs 1.

Bei derartigen Fahrzeugtürsystemen ist zwischen den Fahrzeugtüren keine übliche Fahrzeugsäule vorgesehen, die die Fahrzeugtüröffnung in zwei kleinere Fahrzeugtüröffnungen teilt und gegen die Fahrzeugtüren anschlagen oder an den die Fahrzeugtüren angelagert sind. Die fehlende Fahrzeugsäule ist zum Beispiel bei einer seitlichen Türöffnung einer üblichen Fahrzeugkarosserie eine mittlere Säule bzw. eine so genannte B-Säule. Mit Fehlen dieser Fahrzeugsäule wird das Fahrzeugtürsystem insbesondere hinsichtlich einer seitlichen Aufprallsicherheit geschwächt, wobei hier neben dem nun fehlenden Verformungspotential der Fahrzeugsäule die Gefahr besteht, dass die in der Schließposition gegeneinander geführten Fahrzeugtüren auseinander oder aneinander vorbei gedrückt werden, einen Spalt oder Schlitz ausbilden, sich in den Fahrgastraum hinein schieben oder dergleichen mit einer starken Gefährdung von Fahrzeuginsassen als Folge.

Aus der US 3887227 ist ein Fahrzeugtürsystem bekannt, bei dem zwei hintereinander am Fahrzeug angeordnete Schwenktüren Versteifungsmittel aufweisen, die beim Schließen der Türen ineinandergreifen, ohne jedoch kraftschlüssig verbunden zu sein, wenn sich beide Türen in ihren Schließpositionen befinden. Erst wenn es aufgrund eines Seitenaufpralls zu einer plastischen Deformation einer oder beider Türen kommt, verhaken sich die Versteifungsmittel und verbinden so die beiden Türen kraftschlüssig. Das Fahrzeugtürsystem ist nur für klassische Türanordnungen mit zwei nach vorne schwenkenden Türen und einer dazwischen angeordneten B-Säule geeignet, nicht jedoch für Fahrzeuge ohne B-Säule und mit zwei Türen in der gleichen Türöffnung.

Weitere Fahrzeugtürsysteme, bei denen Verriegelungsmittel ineinandergreifen, werden beispielsweise in der EP 0 540 053 B1 und der JP 2004 90670 A beschrieben, wobei jeweils die Versteifungselemente der Aufprallsicherung mit Schließen der Fahrzeugtüren ineinander greifen. Dies erschwert oder behindert jedoch das Schließen und Öffnen der Fahrzeugtüren an sich.

Desgleichen sind auch in der JP 2004-148877 A beim Schließen einer Fahrzeugtür ineinander greifende Versteifungselemente an den Fahrzeugtüren und der Karosserie offenbart.

In der US 20050023862A1 wird als Aufprallsicherung eine aufwendig, da spezifisch ausgestaltete Karosseriestruktur zur Aufnahme und Umleitung lateraler Aufprallkräfte um den Fahrgastraum vorgeschlagen.

Der Erfindung liegt daher die Aufgabe zugrunde, ein Fahrzeugtürsystem der eingangs genannten Art mit einer wirksamen Aufprallsicherung bereitzustellen, die ein Öffnen und Schließen der Fahrzeugtüren nicht behindert oder erschwert.

Die gestellte Aufgabe wird erfindungsgemäß dadurch gelöst, dass die Versteifungselemente in der Schließposition der Fahrzeugtüren in einer Ruheposition beabstandet zueinander angeordnet sind, dass die Versteifungselemente in der Ruheposition mit den Fahrzeugtüren relativ zueinander verfahrbar sind und dass die Versteifungselemente mit Einleitung eines Aufpralls gegen die Fahrzeugtüren gegeneinander in eine Wirkposition bringbar sind, in der die Versteifungselemente zur Versteifung der Anschlussbereiche und eines Überganges zwischen den Anschlussbereichen Kräfte übertragend zusammenwirken. Somit wird erfindungsgemäß erst mit Einleiten eines Aufpralls gegen die Fahrzeugtüren eine Verbindung zwischen den Versteifungselementen herbeigeführt, durch die Kräfte und Kraftmomente übertragen werden können. In ihre Ruheposition sind die Versteifungselemente zur Versteifung der Anschlussbereiche so angeordnet, dass sie ein Verfahren sowie ein Verschließen und Öffnen der Fahrzeugtüren nicht behindern oder beeinflussen. Durch den Zusammenschluss der Verbindungselemente in ihrer Wirkungsposition können die Versteifungselemente verschlussartig verbunden werden und somit einen Zusammenhalt bilden, der verhindert, dass die Fahrzeugtüren durch den Aufprall auseinandergedrückt oder gerissen werden, wodurch sich ein den Fahrgastraum öffnender Spalt oder Schlitz ausbilden kann. Ferner kann durch die Verbindung der Versteifungselemente in ihre Wirkposition eine Steigerung der gesamten Versteifung der Anschlussbereiche erzielt werden.

Zum Erreichen ihrer Wirkposition kann beispielsweise eines der Versteifungselemente zu dem anderen Versteifungselement hin stark beschleunigt werden. Diese Beschleunigung kann beispielsweise mittels einer gerichteten Explosion eines explosiven Gemisches, komprimierter Luft, gespeicherter Federenergie oder magnetischer Kräfte erfolgen. Vorzugsweise ist jedoch vorgesehen, dass die Versteifungselemente in der Wirkposition senkrecht zu einer Außenseite der Fahrzeugtüren in einer Y-Richtung sowie/oder in und/oder entgegen der Schließrichtung kraft- und/oder formschlüssig aneinander anliegen. Somit können über die Versteifungselemente Kräfte senkrecht zur Außenseite der Fahrzeugtüren sowie/oder, senkrecht dazu, in und/oder entgegen der Schließrichtung von einer Fahrzeugtür auf die andere übertragen werden und somit verhindert werden, dass die Fahrzeugtüren aufreißen.

Nach einem seitlichen Aufprall können verstärkt die Abschnitte der Anschlussstirnseiten aufreißen, die durch den Aufprall besonders stark belastet sind. Daher wird vorgeschlagen, dass die Versteifungselemente in einen bezüglich der Längserstreckung der Anschlussstirnseiten mittleren Abschnitt der Anschlussstirnseiten angeordnet sind. Dieser mittlere Bereich kann allgemein dann als ein Schwachbereich angesehen werden, wenn, wie üblich, die Fahrzeugtüren in ihren Schließpositionen mit einem Abschnitt, mit dem die Anschlussstirnseiten der Fahrzeugtüren gegen die Türöffnung begrenzende Karosserieteile angrenzen, mittels Befestigungsvorrichtungen, wie z.B. Schnappschlössern, Steckverbindungen oder dergleichen, mit der Fahrzeugkarosserie verbunden sind.

Somit ist vorzugsweise vorgesehen, dass der mittlere Abschnitt zumindest einen Bereich umfasst, in dem bei einem seitlichen Aufprall eine zeitlich erste Verformung oder ein Verformungsbeginn der Fahrzeugtüren zu erwarten ist. Vorzugsweise umfasst der mittlere Bereich bei einer Fahrzeugtür mit einer vom Fahrgastraum nach außen gehenden Wölbung zumindest einen Bereich, in dem die Wölbung maximal ist. Im Bereich der maximalen Wölbung ist bei einem seitlichen Aufprall in Y-Richtung senkrecht zur größeren Seitenfläche der Fahrzeugtüren eine zeitlich erste Verformung zu erwarten.

Die Versteifungselemente können sich auch über die gesamte Längserstreckung der Anschlussstirnseiten oder über mehrere Abschnitte der Anschlussstirnseiten erstrecken. Damit können Verbindungsmöglichkeiten der Versteifungselemente beim Aufprall vorgesehen sein, die sich kontinuierlich über die gesamte Längserstreckung der Anschlussstirnseiten oder über bestimmte Abschnitte der Anschlussstirnseiten erstrecken.

Vorzugsweise können die Versteifungselemente eine längliche Form aufweisen. Zweckmäßigerweise können sie in ihrer Längserstreckung längs der Anschlussstirnseiten angeordnet sein. Dadurch können beispielsweise als Versteifungselemente stranggepresste Profile verwendet werden. Die Versteifungselemente können Querprofile aufweisen, die zu einem wirksamen Ineinandergreifen der Versteifungselemente in der Wirkposition geeignet sind. Hierzu kann beispielsweise das Prinzip einer Nutfederverbindung in der Ausbildung der Querprofile Eingang finden. Vorzugsweise ist vorgesehen, dass die Querschnittsprofile jeweils zumindest einen Haken aus einem Schenkel und einem winklig zum Schenkel und schenkelendseitig angeordneten Querschenkel mit Schenkelseitenflächen aufweisen. Ferner kann in der Schließposition der Fahrzeugtüren der Querschenkel des ersten Versteifungselementes vom Fahrgastraum oder im Wesentlichen vom Fahrgastraum weg und der Querschenkel des zweiten Versteifungselementes zum Fahrgastraum oder im Wesentlichen zum Fahrgastraum hin weisend angeordnet sein. Zudem können die Haken in der Schließposition überlappend angeordnet sein. Also können die Schenkelseitenflächen der Querschenkel, die zu der ihnen zugeordneten Fahrzeugtür hinweisen, zueinander gewandt sein. Somit können sich die Haken in Verschiebungsrichtung überlappen. Erfindungsgemäß können die Haken in Richtung senkrecht zur Außenseite der Fahrzeugtüren soweit voneinander beabstandet angeordnet sein, dass sie in der Ruheposition bei einer Relativbewegung in Schieberichtung aneinander vorbei führbar sind, ohne sich zu berühren, zu verhaken oder dergleichen. Hierbei ist die Beabstandung senkrecht zur Schieberichtung bzw. senkrecht zur Außenseite der Fahrzeugtüren oder in Y-Richtung vorzugsweise so bemessen, dass die Versteifungselemente beim Verfahren der Fahrzeugtüren möglichst dicht aneinander vorbei führbar sind. In der Wirkposition können die Haken soweit gegeneinander geführt angeordnet sein, dass sie sich ineinander verhaken.

Vorzugsweise sind Schenkel , und Querschenkel der Haken jeweils rechtwinklig zueinander ausgebildet. Zudem ist der Querschenkel des jeweiligen Hakens vorzugsweise etwa senkrecht zur Außenseite der ihm zugeordneten Fahrzeugtür angeordnet. Bei dem hier vorgeschlagenen hakenförmigen Aufbau der Versteifungselemente und deren Konstellation in ihrer Ruheposition bei der Schließposition der Fahrzeugtüren wird bei einem seitlichen Aufprall senkrecht zur Außenseite der Fahrzeugtüren eine zeitliche Verzögerung, die durch das Gegeneinanderbewegen der Versteifungselemente aus ihrer Ruheposition in ihre Wirkposition entsteht, im Wesentlichen durch die Länge der Querschenkel bestimmt. Bei einer aufprallbedingten Krafteinleitung in Schieberichtung wird die zeitliche Verzögerung durch die Beabstandung der Querschenkel von der jeweils ihnen gegenüber liegenden Anschlussstirnseite der anderen Fahrzeugtür bestimmt. Bei einer aufprallbedingten Krafteinleitung entgegen der Schieberichtung wird die zeitliche Verzögerung im Wesentlichen durch die Beabstandung der Querschenkel in Schieberichtung bestimmt.

Vorteilhafterweise sind die Anschlussstirnseiten zumindest über einen Bereich ihrer

Querschnitte senkrecht zu einer der größeren Seitenflächen der Fahrzeugtüren angeordnet. Dadurch können dieselben bei einer Aufprallbelastung parallel zu der größeren Seitenfläche und senkrecht zur Längserstreckung der Versteifungselemente flächig gegeneinander geschoben und eine Kraft übertragen, anstatt, wie bei einer üblichen Anordnung der Anschlussstirnseiten schräg zu den größeren Seitenflächen sehr wahrscheinlich, aneinander abzugleiten.

In einer üblichen Ausführungsform können die Fahrzeugtüren jeweils zwei einen Hohlraum umschließende Karosseriebleche, einen Außenblech und ein Innenblech, aufweisen, die zumindest an den Anschlussstirnseiten in Form von Verbindungsflanschen miteinander verbunden sind. Hierbei wird vorgeschlagen, dass die Verbindungsflansche den jeweiligen Haken oder zumindest einen Querschenkel oder einen Teil des Querschenkels des Versteifungselementes der zugehörigen Fahrzeugtür bilden können. Diese Maßnahme kann auch bei Fahrzeugtüren mit mehr als zwei Karosserieblechen, beispielsweise mit einem zusätzlichen Stirnblech, das an der Anschlussstirnseite zwischen dem Außenblech und dem Innenblech eingefügt ist und das mit dem Außenblech und/oder dem Innenblech jeweils einen Verbindungsflansch ausbildet, durchgeführt werden. Somit können die Versteifungselemente mit einem Tiefziehen der Karosseriebleche vorgeformt und mit Zusammenfügen der Karosseriebleche ausgebildet werden, wodurch sich die Herstellung der Versteifungselemente erheblich vereinfacht. Als Verbindungsart zur Herstellung der Verbindungsflansche wird ein übliches Punktschweißverfahren bevorzugt.

Die Karosseriebleche können zumindest in den Bereich der Versteifungselemente verstärkt ausgebildet sein. Dies kann beispielsweise durch ein doppeltes Blech und/oder eine größere Blechstärke erfolgen. Das Versteifungselement kann auch bevorzugt als Profilblech auf das Karosserieblech aufmontiert sein, so dass die Steifigkeit der Karosseriebleche zur Gesamtsteifigkeit im Bereich der aufmontieren Versteifungselemente beitragen kann.

In einer Weiterbildung des Fahrzeugtürsystems kann die Aufprallsicherung ein drittes, stabförmiges Versteifungselement umfassen, das bevorzugt entlang der Anschlussstirnseite der ersten Fahrzeugtür und/oder der zweiten Fahrzeugtür angeordnet ist. Somit kann die Anschlussstirnseite der ersten Fahrzeugtür und/oder der zweiten Fahrzeugtür in ihrer Steifigkeit verstärkt werden. Das dritte Versteifungselement kann mittels eines üblichen Fügeverfahrens, bevorzugt mittels Kleben, mit der jeweiligen Anschlussstirnseite verbunden werden. Die erste Fahrzeugtür und/oder die zweite Fahrzeugtür können jeweils das dritte Versteifungselement aufweisen. Somit können das erste und/oder das zweite Versteifungselement auf dem jeweils ihrer Fahrzeugtür zugeordneten dritten Versteifungselement befestigt sein. Hierdurch können das erste und/oder zweite Versteifungselement mit dem zugehörigen dritten Versteifungselement einen Verbund ausbilden, der die Gesamtsteifigkeit der Anschlussstirnseiten erhöht. Zudem kann das dritte Versteifungselement eine Basis für das erste oder zweite Versteifungselement bilden, wobei der Zusammenbau des Verbundes bereits in einem Vormontageschritt erfolgen kann. Das dritte Versteifungselement kann bevorzugt aus einem Polyamid gefertigt sein. Dieser Kunststoff hat den Vorteil, dass er leicht ist und eine ausreichende Festigkeit aufweist, die durch den Herstellungsprozess des Polyamides gesteuert werden kann. Das dritte Versteifungselement kann zusätzlich durch Glas- oder Kohlenstofffasern als glasfaserverstärkter Kunststoff (GFK) bzw. als kohlenstofffaserverstärkter Kunststoff (CFK) ausgebildet sein, wobei sich die jeweiligen Fasern bevorzugt in Längsrichtung des dritten Versteifungselementes erstrecken. Das dritte Versteifungselement kann als Vollkörper oder als Hohlprofil mit einem geschlossenen oder einem offenen Profil ausgebildet sein. Das dritte Versteifungselement ist bevorzugt durch Extrusion hergestellt. Da dritte Versteifungselement kann auch aus Metall, bevorzugt aus Aluminium und dann bevorzugt durch Strangpressen, hergestellt sein.

Das dritte Versteigungselement kann im Falle eines offenen, bevorzugt U-förmigen Hohlprofiles gleichzeitig jeweils das erste und/oder das zweite Versteifungselement bilden, Hierbei sind die U-Profile mit ihren freien Querschenkeln in der Ruheposition der Versteifungselemente zueinander gewandt und beabstandet angeordnet und können in der Wirkposition so ineinander greifen, dass die Querschenkel bei einer Verschiebung in oder gegen Fahrtrichtung seitlich zur Anlage kommen, bei einer Verschiebung zum Fahrgastraum hin jeweils auf dem anderen Versteifungselement aufsitzen und somit Verformungskräfte in diesen Richtungen von einer Fahrzeugtür auf die andere Fahrzeugtüren übertragen können.

In einer bevorzugten Weiterbildung des Fahrzeugtürsystems können beide Fahrzeugtüren als Schiebetüren ausgebildet sein, die mittels Führungsschienen jeweils auf einem nicht linearen Verschiebeweg relativ zur Fahrzeugkarosserie verfahrbar sind. Hierbei kann eine zweite, in Schließrichtung der zweiten Fahrzeugtür hintere Führungsschiene für die zweite Fahrzeugtür in einem in Schließrichtung hinteren Abschnitt mit einem größeren Weganteil zu dem Fahrgastraum hin verlaufen. Vorzugsweise ist bei dieser Ausführungsform der Fahrzeugtüren als Schiebetüren das erste Versteifungselement auf der ersten Schiebetür und das zweite Versteifungselement auf der zweiten Schiebetür angeordnet. Hiermit kann das erste Versteifungselement mit Verfahren der es tragenden ersten Schiebetür auf dem letzten Abschnitt des Verschiebeweges in die Schließposition etwa parallel oder parallel zu der größeren Seitenfläche der ersten Fahrzeugtür in der Schließposition verfahren werden und damit bezüglich der Außenseite unter die zweite Schiebetür geschoben werden, wenn diese sich in ihrer Schließposition befindet. Hierzu ist, wie häufig üblich, ein gestufter Querschnitt der Anschlussstirnseiten notwendig, der, in Schließrichtung der ersten Fahrzeugtür von der Außenseite der jeweils zugehörigen Fahrzeugtür mit einem Weganteil in Richtung zum Fahrgastraum geführt ist. Dies gilt auch für die noch zu beschreibende weitere Ausführungsform der Fahrzeugtüren. Das zweite Versteifungselement auf der zweiten Fahrzeugtür, die auf dem hinteren Abschnitt ihrer Führungsschiene mit einem größeren Weganteil zu dem Fahrgastraum hin in die Türöffnung

verschwenkbar ist, entsprechend gegen das erste Versteifungselement der sich in Schließposition befindlichen ersten Fahrzeugtür verschwenkt werden, ohne dass sich die beiden Versteifungselemente gemäß ihrer Ruheposition in der Schließposition der Fahrzeugtüren berühren oder ineinander greifen.

Einer anderen Ausbildungsform des Fahrzeugtürsystems kann die zweite Fahrzeugtür als Schwenktür ausgebildet, die um eine Schwenkachse senkrecht zu ihrer Schwenkschließrichtung verschwenkbar an einem Rahmenteil der Fahrzeugkarosserie befestigt sein kann.

Vorzugsweise sind das erste Versteifungselement auf der Schiebetür und das zweite Versteifungselement auf der Schwenktür angeordnet. Somit kann auch hier, wie in dem vorhergehenden Beispiel, in dem die beiden Fahrzeugtüren als Schiebetüren ausgebildet sind, das erste Versteifungselement auf der hinteren Führungsschiene etwa parallel oder parallel zu einer größeren Seitenfläche in der ersten Fahrzeugtür und damit der Schiebetür bezüglich der Außenseite unter die sich in Schließposition befindliche Schwenktür und damit unter das zweite Versteifungselement geschoben werden. Desgleichen kann das zweite Versteifungselement mit der Schwenktür gegen das erste Versteifungselement auf der Schiebetür in der Schließposition verschwenkt werden, wobei auch hier die beiden Versteifungselemente so zueinander in der Schließposition der Fahrzeugtüren angeordnet sind, dass sie, gemäß ihrer definierten Ruheposition, sich nicht berühren oder ineinander verhaken können, aber bevorzugt in einem minimalen Abstand zueinander angeordnet sind.

Die vorliegende Erfindung wird im Folgenden anhand mehrerer Ausführungsbeispiele näher erläutert. Hierbei ist die Erfindung in der Zeichnung stark schematisiert so wiedergegeben, dass das zugrunde liegende Prinzip deutlich werden kann. In der Zeichnung zeigen:
- Figur 1: eine perspektivische Darstellung einer ersten Ausführungsform eines Fahrzeugtürsystems,
- Figur 1a: einen Ausschnitt gemäß Figur 1,
- Figur 2: einen schematisierten Querschnittsverlauf A - A gemäß Figur 1 a,
- Figur 3: den schematisierten Querschnittsverlauf gemäß Figur 2 nach einer ersten Belastungsform,
- Figur 4: den schematisierten Querschnittsverlauf gemäß Figur 2 nach einer zweiten Belastungsform,
- Figur 5: den schematisierten Querschnittsverlauf gemäß Figur 2 nach einer dritten Belastungsform und
- Figur 6: eine perspektivische Querschnittsansicht einer zweiten Ausführungsform des Fahrzeugtürsystems mit einem zusätzlichen dritten Versteifungselement in einem Querschnittsverlauf ähnlich dem in Figur 1 a gezeigten Querschnittsverlauf A-A.

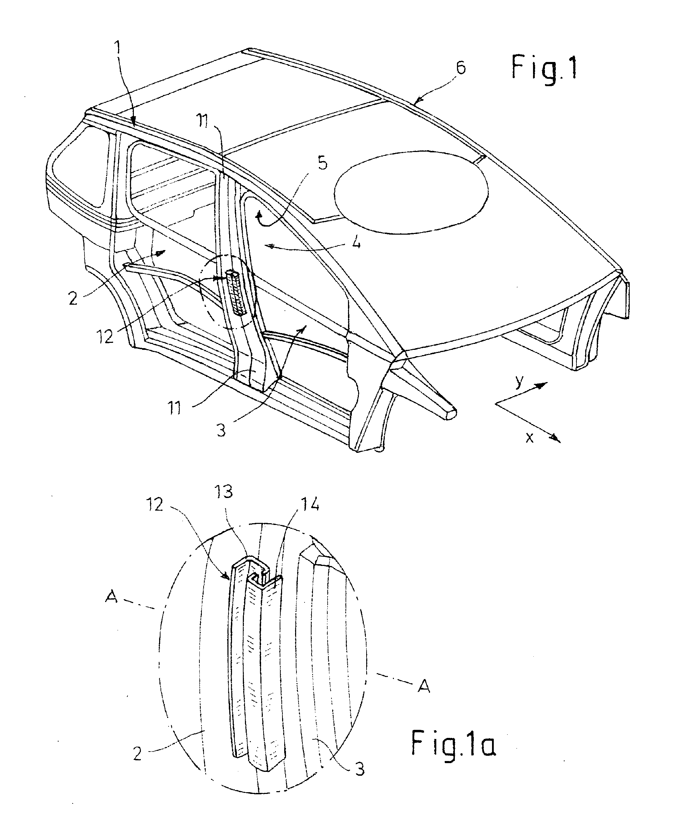

In den Figuren 1 bis 5 wird in verschiedenen Ansichten und Teilansichten eine erste Ausführungsform eines Fahrzeugtürsystems 1 mit zwei Fahrzeugtüren, einer ersten Fahrzeugtür 2 und einer zweiten Fahrzeugtür 3, gezeigt. Die Fahrzeugtüren 2, 3 sind in eine gemeinsame Fahrzeugtüröffnung 4 einer einen Fahrgastraum 5 einschließenden Fahrzeugkarosserie 6 hinein verfahrbar. Die Fahrzeugtüröffnung 4 ist seitlich der Fahrzeugkarosserie 6 angeordnet. Sie weist keine mittlere Säule oder B-Säule auf, gegen die die beiden Fahrzeugtüren 2, 3 anschlagen können.

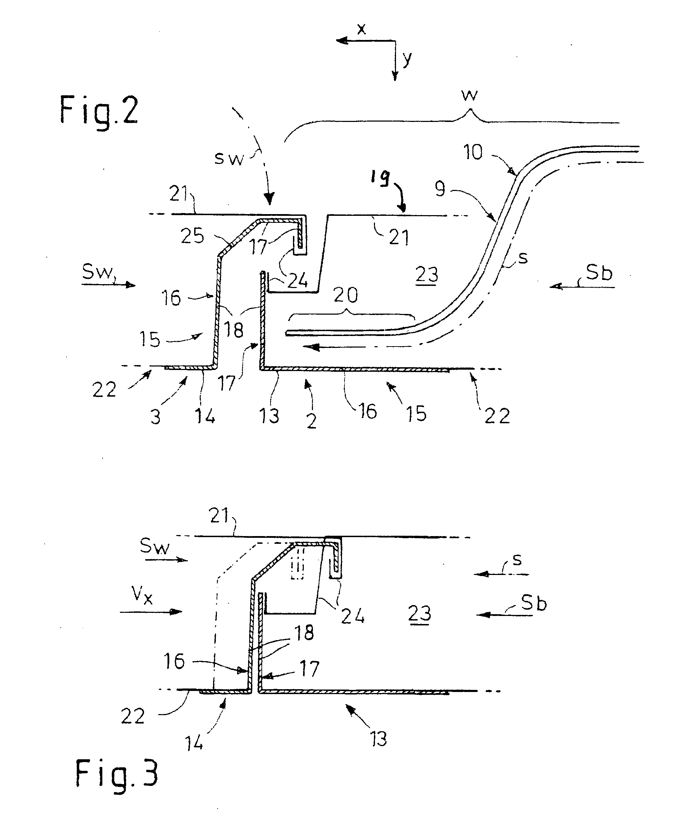

Die Fahrzeugtüren 2, 3 sind zum Verschließen der Fahrzeugtüröffnung 4 aus einer hier nicht dargestellten Offenposition in eine in den Figuren dargestellte Schließposition hinein und sich relativ aufeinander zu bewegend verfahrbar, wobei die Fahrzeugtüren 2, 3 in der Schließposition jeweils in einem Anschlussbereich 7 mit einer Anschlussstirnseite 8 einander gegenüberliegend angeordnet sind. In dem hier gezeigten Ausführungsbeispiel des Fahrzeugtürsystems 1 ist die erste Fahrzeugtür 2 als Schiebetür Sb ausgebildet, die in Fahrtrichtung x vorn angeordnet ist. Die Schiebetür Sb ist, wie in Figur 2 schematisch wiedergegeben, mittels Führungsschienen 9 auf einem bezüglich der Fahrzeugkarosserie 6 nichtlinearen Verschiebeweg w in einer Schließrichtung s in Fahrtrichtung x aus der Offenposition in die Schließposition verschiebbar ist, wobei in Figur 2 von den Führungsschienen 9 lediglich eine in Schließrichtung hintere Führungsschiene 10 dargestellt ist. Die zweite Fahrzeugtür 3 ist als Schwenktür Sw ausgebildet, die um eine Schwenkachse a an der Fahrzeugkarosserie 6 und in einer Schwenkschließrichtung sw in die Fahrzeugtüröffnung 4 verschwenkbar ist.

Die Fahrzeugtüren 2, 3 sind jeweils in einem oberen und unteren Abschnitt ihres Anschlussbereiches 7 mittels einer Verbindungsvorrichtung 11 mit der Fahrzeugkarosserie 6 verbunden. Das Fahrzeugtürsystem 1 weist ferner eine Aufprallsicherung 12 mit Versteifungselementen, einem ersten Versteifungselement 13 und einem zweiten Versteifungselement 14, zur Versteifung der Fahrzeugtüren 2, 3 in der Fahrzeugtüröffnung 4 auf, die, wie weiter unten näher erläutert, ihre volle Wirksamkeit erst bei einem Aufprall entfalten. Das erste Versteifungselement 13 ist an der Anschlussstirnseite 8 der ersten Fahrzeugtür 2 und das zweite Versteifungselement 14 an der Anschlussstirnseite 8 der zweiten Fahrzeugtür 3 positioniert. Die Versteifungselemente 12, 13 weisen eine längliche Form auf und sind in ihrer Längserstreckung längs der Anschlussstirnseiten 7 angeordnet. Beide Versteifungselemente 13, 14 sind einander gegenüber liegend und auf halber Höhe in einem mittleren Bereich der Fahrzeugtüren 2, 3 angeordnet, in dem bei einem seitlichen Aufprall senkrecht zur Fahrtrichtung x eine zeitliche erste Verformung der Fahrzeugtüren 2, 3 zu erwarten ist. Wie insbesondere der Figur 1a, einer Ausschnittsvergrößerung aus Figur 1, entnehmbar, sind die beiden Versteifungselemente 13, 14 der Kontur der jeweiligen Anschlussstirnseite 8 angepasst.

Figur 2 zeigt eine stark schematische Querschnittsansicht gemäß dem Querschnittsverlauf A - A in Figur 1 a. Die Versteifungselemente 13, 14 befinden sich bei der Schließposition der Fahrzeugtüren 2, 3 in Figur 2 in einer Ruheposition, in der die Versteifungselemente 13, 14 beabstandet zueinander angeordnet. sind und in der noch keine Verformung infolge eines Aufpralles oder dergleichen stattgefunden hat. Die in der Figur 2 schematisch wiedergegebenen Querschnittsprofile der beiden Versteifungselemente 13, 14 weisen im wesentlichen einen Haken 15 mit einem Schenkel 16 und einem rechtwinklig zum Schenkel 16 schenkelendseitig angeordneten Querschenkel 17 mit Schenkelseitenflächen 18 auf. Hierbei sind die Versteifungselemente 13, 14 in der Schließposition der Fahrzeugtüren 2, 3 überlappend angeordnet. Ferner sind die beiden Querschenkel 17 in der Schließposition der Fahrzeugtüren 2, 3 senkrecht zu einer der größeren Seitenflächen 19 der Fahrzeugtüren 2, 3 oder in y-Richtung ausgerichtet. Die Fahrzeugtüren 2,3 sind jeweils aus einem Außenblech 21 und einem Innenblech 22 geformt, die einen Hohlraum 23 einschließen und unter Ausbildung eines Verbindungsflansches 24 miteinander verbunden sind. Der Verbindungsflansch 24 wiederum bildet in diesem Ausführungsbeispiel bei der Schiebetür Sb einen Teil des Querschenkels 17 und bei der Schwenktür Sw zusätzlich einen Teil des Schenkels 16. Der Haken 15 der Schwenktür Sw weist ein Profil mit einem doppelten Querschenkel 17 zum Übergreifen und Eingreifen in den Haken 15 der Schiebetür Sb auf, wobei zur Festigkeitssteigerung ein schräg verlaufenden Schenkelabschnitt 25 vorgesehen ist.

Die hintere Führungsschiene 10 weist einen in Schließrichtung s hinteren Abschnitt 20 auf, der etwa parallel zu der größeren Seitenfläche 19 der ersten Fahrzeugtür 2 in der Schließposition angeordnet ist. Dies bewirkt, dass die erste Fahrzeugtür 2 mit ihrem Anschlussbereich 7 mittels des hinteren Abschnittes 24 der hinteren Führungsschiene 10 entsprechend parallel zu einer größeren Seitenfläche 19 in Schließposition führbar ist und mit ihrem ersten Versteifungselement 13 das zweite Versteifungselement 14 an der Schwenktür Sw in der Schließposition untergreifen kann, ohne dass sich die beiden Versteifungselemente 13, 14 berühren oder verhaken können. Ebenfalls können sich die Versteifungselemente 13, 14 bei einer Verschwenkung der Schwenktür Sw auch dann nicht berühren oder ineinander verhaken, wenn sich die erste Fahrzeugtür 2 bereits in der Schließposition befindet, da sich diese mit Schließen der Schwenktür Sw in Richtung auf den Fahrgastraum auf das erste Versteifungselement zu bewegt. Von Vorteil ist, wie weiter unten näher ausgeführt, dass die Anschlussstirnseiten 8 überwiegend stufig und rechtwinklig zur Fahrtrichtung x angeordnet sind.

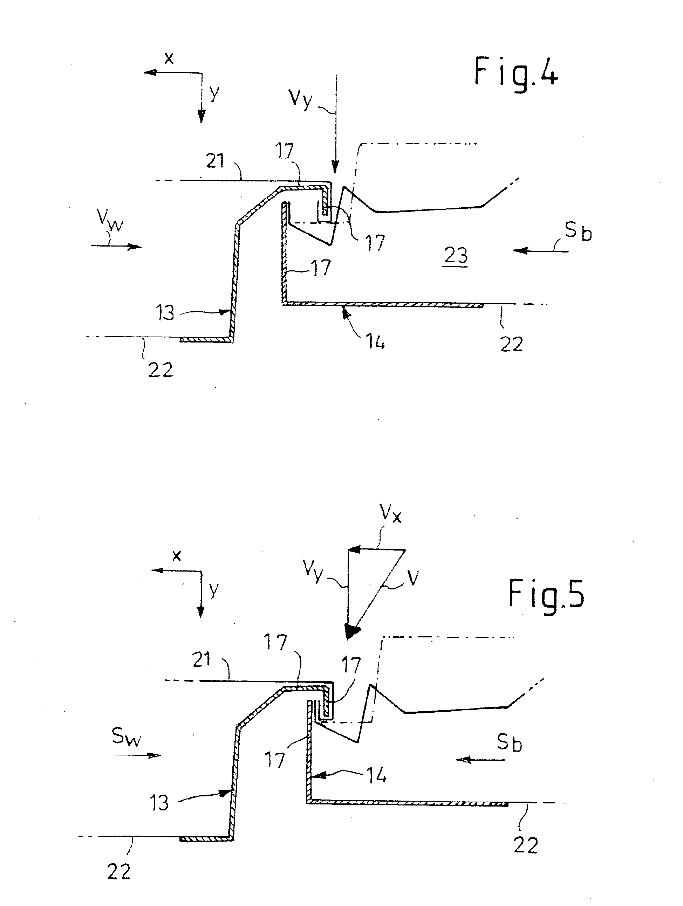

In den Figuren 3 bis 5 werden, der Anschaulichkeit halber wiederum stark schematisiert, beispielgebend drei unterschiedliche Belastungsfälle infolge eines Aufpralls und seine Auswirkungen auf den in Figur 4 gezeigten Querschnitt gezeigt, wobei mehr auf mögliche Verschiebungen der beiden Anschlussbereiche 7 der Fahrzeugtüren 2, 3 und weniger auf tatsächliche Verformungsvorgänge in den Fahrzeugtüren 2, 3 eingegangen wird. Hierbei sind die ursprüngliche Position der Anschlussbereiche 7 mit gestrichelten Linien und die infolge des Aufpralls verschobene Position der Anschlussbereiche 7 mit durchgezogenen Linien dargestellt.

In Figur 3 erfolgt eine Verformungskraft Vₓ entgegen der Fahrtrichtung x oder der Schließrichtung s der Schiebetür sb, durch die die Schwenktür Sw gegen die Schiebetür Sb gedrückt wird. Hierbei sind die Versteifungselemente 13,14 in eine Wirkposition verschoben, in der sie Verformungskräfte von der Schwenktür Sw auf die Schiebetür übertragen können. Ein gleicher Belastungsfall ergäbe sich bei einer Krafteinleitung in Fahrtrichtung durch beispielsweise ein Auffahren eines anderen Fahrzeuges auf das vorliegende Fahrzeug. Dank des stufigen Querschnittsverlaufes der Anschlussstirnseiten der Schiebetür Sb, der Ausrichtung des Querschenkels 17 des Hakens 15 der Schwenktür Sw und der weitgehend parallelen, senkrecht zur Fahrtrichtung x konzipierten Ausrichtung der Anschlussstirnseiten 8, liegen Anschlussstirnseiten 8 mit dem Schenkel 16 der Schwenktür Sw und dem Querschenkel 17 der Schiebetür Sb mit dem Aufprall aneinander an, ohne aneinander abzugleiten. Somit wird der Verbund zwischen den Fahrzeugtüren 2, 3 im Aufprall versteift und kann entsprechend eine Verformungskraft von einer Fahrzeugtür auf die andere übertragen werden.

In Figur 4 erfolgt eine Einleitung einer Verformungskraft Vy senkrecht zur größeren Seitenfläche oder in Y-Richtung sowie zum Fahrgastraum 5 hin der Schließrichtung s der Schiebetür sb, durch die die Schwenktür Sw gegen die Schiebetür Sb gedrückt wird. Gleichzeitig sind die Versteifungselemente 13,14 sind in der Wirkposition gegeneinander gedrückt. Indem sie über die Haken 15 ineinander greifen, verhaken sich die beiden Fahrzeugtüren 2,3 ineinander, so dass hierdurch ein Aufreißen an den Anschlussstirnseiten 8 mit einer Spaltbildung zum Fahrgastraum 5 hin vermieden wird.

Die Figur 5 gibt einen Belastungsfall wieder, in dem eine Verformungskraft V schräg auf die größere Seitenfläche 19 mit einer Komponenten Vₓ in X-Richtung und einer Komponente V_{y} in y-Richtung, d.h. zum Fahrgastraum 5 hin wirkt. Hierdurch werden die Versteifungselemente 13,14 in ihre Wirkposition gebracht, indem sie hier, gleich dem Belastungsfall gemäß Figur 4, gegeneinander gedrückt werden und sich hier noch zusätzlich so verhaken, dass die Querschenkel 17 beider Versteifungselemente 13,14 flächig aneinander liegen. Somit wird auch hier ein Aufreißen der Fahrzeugtüren 2,3 in der Fahrzeugtüröffnung 4 verhindert.

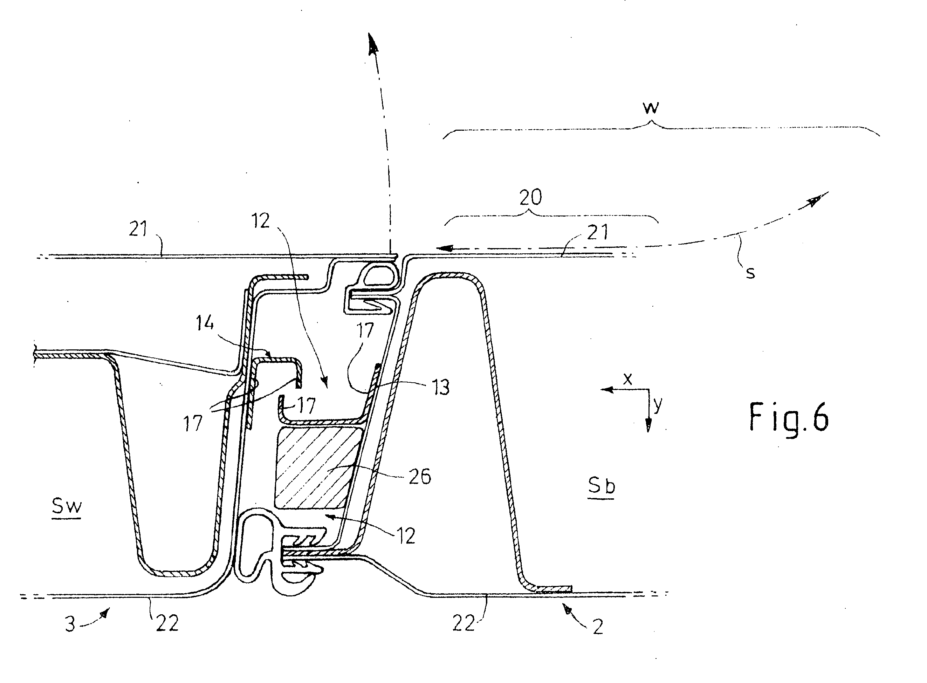

In der Figur 6 ist eine perspektivische Querschnittsansicht einer zweiten Ausführungsform des Fahrzeugtürsystems 1 in einem Querschnittsverlauf, ähnlich dem in Figur 1 a gezeigten Querschnittsverlauf A-A, gezeigt, wobei jedoch lediglich ein Ausschnitt des Fahrzeugtürsystems 1 mit den Anschlussbereichen 8 der Fahrzeugtüren 2, 3 wiedergegeben ist. Die Aufprallsicherung 12 ist mit einem zusätzlichen Versteifungselement, einem dritten Versteifungselement 26, versehen. Das dritte Versteifungselement 26 ist stabförmig ausgebildet, auf der Anschlussstirriseite 8 der Schiebetür Sb befestigt und erstreckt sich, welches hier der Zeichnung nicht explizit entnehmbar ist, über die gesamte Länge Anschlussstirnseite 8. Das dritte Versteifungselement 26 wirkt gemäß dem Stand der Technik ähnlich einer hier nicht vorgesehenen B-Säule. Zur Gewichtsersparnis besteht das dritte Versteifungselement 26 aus einem Polyamid, ist als Vollkörper ausgebildet und mit der Anschlussstirnseite verklebt. Vorteilhaft ist auf dem dritten Versteifungselement 26 das erste Versteifungselement 13 aufmontiert, das in diesem Ausführungsbeispiel nicht zum Teil aus einem Verbindungsflansch sondern aus einem Profilblech gebildet ist. Das erste Versteifungselement 13 weist hierbei ein U-Profil mit zwei Querschenkeln 17 auf die in Y-Richtung vom Fahrgastraum 5 weg weisen. Beabstandet hierzu, befindet sich das zweite Versteifungselement 14 in Ruheposition, dessen Querschenkel 17 in der hier nicht gezeigten Wirkposition zwischen die Querschenkel 17 des ersten Versteifungselementes 13 geführt ist, sodass das zweite Versteifungselement 14 bei einer Verschiebung in y-Richtung zum Fahrgastraum hin und/oder in oder entgegen Fahrtrichtung infolge einer Verformung durch einen Aufprall oder dergleichen stets gegen das erste Versteifungselement 13 anstößt bzw. sich mit demselben verhakt, so dass ein Aufreißen der Fahrzeugtüren 2,3 an den Anschlussbereichen 7 vermieden wird.

### BEZUGSZEICHENLISTE

| | |
|---|---|
| 1 | Fahrzeugtürsystem |
| 2 | Erste Fahrzeugtür |
| 3 | Zweite Fahrzeugtür |
| 4 | Fahrzeugtüröffnung |
| 5 | Fahrgastraum |
| 6 | Fahrzeugkarosserie |
| 7 | Anschlussbereich |
| 8 | Anschlussstirnseite |
| 9 | Führungsschiene |
| 10 | Hintere Führungsschiene |
| 11 | Verbindungsvorrichtung |
| 12 | Aufprallsicherung |
| 13 | Erstes Versteifungselement |
| 14 | Zweites Versteifungselement |
| 15 | Haken |
| 16 | Schenkel |
| 17 | Querschenkel |
| 18 | Schenkelseitenfläche |
| 19 | Seitenfläche |
| 20 | Hinterer Abschnitt |
| 21 | Außenblech |
| 22 | Innenblech |
| 23 | Hohlraum |
| 24 | Verbindungsflansch |
| 25 | Schenkelabschnitt |
| 26 | Drittes Versteifungselement |
| a | Schwenkachse |
| s | Schließrichtung |
| sw | Schwenkschließrichtung |
| w | Verschiebeweg |
| x | Fahrtrichtung |
| y | Y-Richtung |
| Sb | Schiebetür |
| Sw | Schwenktür |
| V | Verformungskraft |
| Vₓ | Verformungskraft in X-Richtung |
| V_{y} | Verformungskraft in y-Richtung |

## Patentansprüche

1. Fahrzeugtürsystem mit zwei Fahrzeugtüren, einer ersten Fahrzeugtür und einer zweiten Fahrzeugtür, die in eine gemeinsame Fahrzeugtüröffnung einer einen Fahrgastraum einschließenden Fahrzeugkarosserie verfahrbar sind, indem die Fahrzeugtüren zum Verschließen der Fahrzeugtüröffnung aus einer Offenposition in eine Schließposition hinein und relativ aufeinander zu bewegend verfahrbar sind und in der Schließposition jeweils in einem Anschlussbereich mit einer Anschlussstirnseite einander gegenüberliegend angeordnet sind,
und mit einer Aufprallsicherung, die Versteifungselemente zur Versteifung der Fahrzeugtüren in der Fahrzeugtüröffnung aufweist, wobei mindestens ein erstes Versteifungselement in dem Anschlussbereich der ersten Fahrzeugtür und mindestens ein zweites Versteifungselement in dem Anschlussbereich der zweiten Fahrzeugtür angeordnet sind, wobei die Versteifungselemente (13, 14) in der Schließposition der Fahrzeugtüren (2,3) in einer Ruheposition beabstandet zueinander angeordnet sind, und wobei die Versteifungselemente (13, 14) in der Ruheposition mit den Fahrzeugtüren (2,3) relativ zueinander verfahrbar sind, dadurch gekennzeichenet, dass die als Schiebetür (Sb) ausgebildete erste Fahrzeugtür (2) mittels Führungsschienen (9) auf einem nichtlinearen Verschiebeweg (w) relativ zur Fahrzeugkarosserie (6) verfahrbar ist und eine in Schließrichtung (s) hintere Führungsschiene (10) in einem in Schließrichtung (s) hinterem Abschnitt (20) etwa parallel zu einer größeren Seitenfläche (19) der ersten Fahrzeugtür (2) in der Schließposition verläuft, und dass die Versteifungselemente (13, 14) mit Einleitung eines Seitenaufpralls gegen die Fahrzeugtüren (2, 3) gegeneinander in eine Wirkposition bringbar sind, in der die Versteifungselemente (13, 14) zur Versteifung der Anschlussbereiche (7) und eines Überganges zwischen den Anschlussbereichen (7) Kräfte übertragend zusammenwirken.

2. Fahrzeugtürsystem nach Anspruch 1,
**dadurch gekennzeichnet, dass** die Versteifungselemente (13, 14) in der Wirkposition senkrecht zu einer Außenseite der Fahrzeugtüren (2, 3) in Y-Richtung (y) sowie/oder in und/oder entgegen der Schließrichtung (s) kraft- und/oder formschlüssig aneinander anliegen.

3. Fahrzeugtürsystem nach Anspruch 1 oder 2,
**dadurch gekennzeichnet*,* dass** die Versteifungselemente (13, 14) in einem bezüglich der Längserstreckung der Anschlussstirnseiten (8) mittleren Abschnitt der Anschlussstirnseiten (8) und in der Ruheposition einander gegenüberliegend angeordnet sind.

4. Fahrzeugtürsystem nach einem der Ansprüche 1 bis 3,
**dadurch gekennzeichnet, dass** die Versteifungselemente (13, 14) Querschnittsprofile aufweisen, die zu einem wirksamen Ineinandergreifen der Versteifungselemente (13, 14) in der Wirkposition geeignet sind.

5. Fahrzeugtürsystem nach Anspruch 4,
**dadurch gekennzeichnet, dass** die Querschnittsprofile jeweils zumindest einen Haken (15) aus einem Schenkel (16) und einem winklig zum Schenkel (16) schenkelendseitig angeordneten Querschenkel (17) mit Schenkelseitenflächen (18) aufweisen, in der Schließposition der Fahrzeugtüren (2, 3) der Querschenkel (17) des ersten Versteifungselementes (13) vom Fahrgastraum (5) oder im wesentlichen vom Fahrgastraum (5) weg und der Querschenkel (17) des zweiten Versteifungselementes (14) zum Fahrgastraum (5) oder im wesentlichen zum Fahrgastraum (5) hin weisend angeordnet sind und die Haken (15) in der Schließposition überlappend angeordnet sind.

6. Fahrzeugtürsystem nach Anspruch 5,
**dadurch gekennzeichnet, dass** Schenkel (16) und Querschenkel (17) der Haken (15) jeweils rechtwinklig zueinander ausgebildet sind und dass der Querschenkel (17) etwa senkrecht zur Außenseite der ihm zugeordneten Fahrzeugtür (2,3) angeordnet ist.

7. Fahrzeugtürsystem nach Anspruch 5 oder 6,
**dadurch gekennzeichnet, dass** die Fahrzeugtüren (2, 3) jeweils zwei einen Hohlraum (23) umschließende Karosseriebleche, ein Außenblech (21) und ein Innenblech (22), aufweisen, die zumindest an den Anschlussstirnseiten (8) in Form von Verbindungsflanschen (24) außerhalb des Hohlraumes (23) miteinander verbunden sind, und dass die Verbindungsflansche (24) den jeweiligen Haken (15) oder zumindest den Querschenkel (17) desselben der zugehörigen Fahrzeugtür (2,3) bilden.

8. Fahrzeugtürsystem nach Anspruch 7,
**dadurch gekennzeichnet, dass** die Karosseriebleche (21,22) zumindest in dem Bereich der Versteifungselemente (13, 14) verstärkt sind.

9. Fahrzeugtürsystem nach einem der Ansprüche 1 bis 8,
**dadurch gekennzeichnet, dass** die Aufprallsicherung (12) ein drittes, stabförmiges Versteifungselement (26) umfasst, das entlang der Anschlussstirnseite (8) der ersten Fahrzeugtür (2) und/oder der zweiten Fahrzeugtür (3) angeordnet ist.

10. Fahrzeugtürsystem nach Anspruch 9,
**dadurch gekennzeichnet, dass** das erste und/oder das zweite Versteifungselement (13, 14) auf dem jeweils ihrer Fahrzeugtür (2, 3) zugehörigen dritten Versteifungselement (26) befestigt sind.

11. Fahrzeugtürsystem nach Anspruch 9 oder 10,
**dadurch gekennzeichnet, dass** das dritte Verstärkungselement (26) zumindest teilweise aus einem Polyamid, aus GFK oder aus CFK gefertigt ist.

12. Fahrzeugtürsystem nach einem der Ansprüche 1 bis 11 ,
**dadurch gekennzeichnet, dass** beide Fahrzeugtüren (2, 3) als Schiebetüren (Sb) ausgebildet sind, die mittels Führungsschienen (9) jeweils auf einem nichtlinearen Verschiebeweg (w) relativ zur Fahrzeugkarosserie (6) verfahrbar sind, wobei eine zweite, in Schließrichtung (s) der zweiten Fahrzeugtür (3) hintere Führungsschiene (10) für die zweite Fahrzeugtür (3) in einem in Schließrichtung (s) der zweiten Fahrzeugtür (3) hinterem Abschnitt (20) mit einem größeren Weganteil zu dem Fahrgastraum (5) hin verläuft.

13. Fahrzeugtürsystem nach Anspruch 12,
**dadurch gekennzeichnet, dass** das erste Versteifungselement (13) auf der ersten Schiebetür (Sb) und das zweite Versteifungselement (13) auf der zweiten Schiebetür (Sb) angeordnet sind.

14. Fahrzeugtürsystem nach einem der Ansprüche 1 bis 11 ,
**dadurch gekennzeichnet, dass** die zweite Fahrzeugtür (3) als Schwenktür (Sw) ausgebildet ist, die um eine Schwenkachse (a) senkrecht zur einer Schwenkschließrichtung (sw) verschwenkbar an einem Rahmenteil der Fahrzeugkarosserie (6) befestigt ist.

15. Fahrzeugtürsystem nach Anspruch 14,
**dadurch gekennzeichnet, dass**
das erste Versteifungselement (13) auf der Schiebetür (Sb) und das zweite Versteifungselement (14) auf der Schwenktür (Sw) angeordnet sind.

## Claims

1. Vehicle door system with two vehicle doors, a first vehicle door and a second vehicle door, which are movable into a common vehicle door opening of a vehicle body enclosing a passenger compartment by, for closing the vehicle door opening, the vehicle doors being movable in a manner such that they move from an open position into a closed position and relative to each other and, in the closed position, each are arranged lying opposite each other in a connecting region with a connecting end side, and with impact protection which has stiffening elements for stiffening the vehicle doors in the vehicle door opening, at least one first stiffening element being arranged in the connecting region of the first vehicle door and at least one second stiffening element being arranged in the connecting region of the second vehicle door, wherein, in the closed position of the vehicle doors (2, 3), the stiffening elements (13, 14) are arranged spaced apart from each other in a rest position, and wherein, in the rest position, the stiffening elements (13, 14) are movable relative to each other by means of the vehicle doors (2, 3), **characterized in that** the first vehicle door (2), which is designed as a sliding door (Sb), is movable by means of guide rails (9) on a nonlinear displacement path (w) relative to the vehicle body (6) and a guide rail (10) which is at the rear in the closing direction (s) runs in a section (20) which is at the rear in the closing direction (s) approximately parallel to a relatively large side surface (19) of the first vehicle door (2) in the closed position, and **in that**, with the introduction of a lateral impact against the vehicle doors (2, 3), the stiffening elements (13, 14) can be brought counter to each other into an active position in which the stiffening elements (13, 14) interact in a force-transmitting manner in order to stiffen the connecting regions (7) and a transition between the connecting regions (7).

2. Vehicle door system according to Claim 1, **characterized in that**, in the active position, the stiffening elements (13, 14) bear against each other in a frictional and/or form-fitting manner perpendicular with respect to an outside of the vehicle doors (2, 3) in the Y direction (y) and/or in and/or counter to the closing direction (s).

3. Vehicle door system according to Claim 1 or 2, **characterized in that** the stiffening elements (13, 14) are arranged in a central section of the connecting end sides (8), with respect to the longitudinal extent of the connecting end sides (8), and such that they lie opposite each other in the rest position.

4. Vehicle door system according to one of Claims 1 to 3, **characterized in that** stiffening elements (13, 14) have cross-sectional profiles which are suitable for effective interengagement of the stiffening elements (13, 14) in the active position.

5. Vehicle door system according to Claim 4, **characterized in that** the cross-sectional profiles each have at least one hook (15) comprising a limb (16) and a transverse limb (17), which is arranged on the limb end side at an angle to the limb (16) and has limb side surfaces (18), in the closed position of the vehicle doors (2, 3) the transverse limb (17) of the first stiffening element (13) is arranged such that it points away from the passenger compartment (5) or essentially away from the passenger compartment (5) and the transverse limb (17) of the second stiffening element (14) is arranged such that it points toward the passenger compartment (5) or essentially toward the passenger compartment (5), and the hooks (15) are arranged such that they overlap in the closed position.

6. Vehicle door system according to Claim 5, **characterized in that** the limb (16) and transverse limb (17) of the hooks (15) are each formed at right angles to each other, and **in that** the transverse limb (17) is arranged approximately perpendicularly with respect to the outside of the vehicle door (2, 3) assigned to it.

7. Vehicle door system according to Claim 5 or 6, **characterized in that** the vehicle doors (2, 3) each have two body panels, an outer panel (21) and an inner panel (22), which enclose a cavity (23) and are connected to each other at least at the connecting end sides (8) in the form of connecting flanges (24) outside the cavity (23), and **in that** the connecting flanges (24) form the respective hook (15) or at least the transverse limb (17) of the same of the associated vehicle door (2, 3).

8. Vehicle door system according to Claim 7, **characterized in that** the body panels (21, 22) are reinforced at least in the region of the stiffening elements (13, 14).

9. Vehicle door system according to one of Claims 1 to 8, **characterized in that** the impact protection (12) comprises a third, bar-shaped stiffening element (26) which is arranged along the connecting end side (8) of the first vehicle door (2) and/or of the second vehicle door (3).

10. Vehicle door system according to Claim 9, **characterized in that** the first and/or the second stiffening element (13, 14) are fastened on the third stiffening element (26) respectively associated with their vehicle door (2, 3).

11. Vehicle door system according to Claim 9 or 10, **characterized in that** the third reinforcing element (26) is at least partially manufactured from a polyamide, from GFRP or from CFRP.

12. Vehicle door system according to one of Claims 1 to 11, **characterized in that** both vehicle doors (2, 3) are designed as sliding doors (Sb) which are each movable by means of guide rails (9) on a nonlinear displacement path (w) relative to the vehicle body (6), a second guide rail (10) for the second vehicle door (3), which guide rail is at the rear in the closing direction (s) of the second vehicle door (3), running in a section (20) which is at the rear in the closing direction (s) of the second vehicle door (3) with a greater amount of distance toward the passenger compartment (5).

13. Vehicle door system according to Claim 12, **characterized in that** the first stiffening element (13) is arranged on the first sliding door (Sb) and the second stiffening element (13) is arranged on the second sliding door (Sb).

14. Vehicle door system according to one of Claims 1 to 11, **characterized in that** the second vehicle door (3) is designed as a pivoting door (Sw) which is fastened to a frame part of the vehicle body (6) in a manner such that it can pivot about a pivot axis (a) perpendicularly with respect to the one pivoting closing direction (sw).

15. Vehicle door system according to Claim 14, **characterized in that** the first stiffening element (13) is arranged on the sliding door (Sb) and the second stiffening element (14) is arranged on the pivoting door (Sw).

## Revendications

1. Système de porte de véhicule comprenant deux portes de véhicule, une première porte de véhicule et une deuxième porte de véhicule, qui peuvent être déplacées dans une ouverture de porte de véhicule commune d'une carrosserie de véhicule renfermant un habitacle de conduite, les portes de véhicule pouvant être déplacées pour fermer l'ouverture de porte de véhicule depuis une position d'ouverture dans une position de fermeture et l'une par rapport à l'autre et, dans la position de fermeture, étant disposées à chaque fois dans une région de raccordement avec un côté frontal de raccordement en regard l'une de l'autre, et comprenant une protection contre les collisions, qui présente des éléments de renforcement pour le renforcement des portes de véhicule dans l'ouverture de porte de véhicule, au moins un premier élément de renforcement étant disposé dans la région de raccordement de la première porte de véhicule et au moins un deuxième élément de renforcement étant disposé dans la région de raccordement de la deuxième porte de véhicule, les éléments de renforcement (13, 14) étant disposés à distance l'un de l'autre dans une position de repos dans la position de fermeture des portes de véhicule (2, 3) et les éléments de renforcement (13, 14) pouvant être déplacés l'un par rapport à l'autre dans la position de repos avec les portes de véhicule (2, 3), **caractérisé en ce que** la première porte de véhicule (2) réalisée sous forme de porte coulissante (Sb) peut être déplacée au moyen de rails de guidage (9) sur une voie de coulissement non linéaire (w) par rapport à la carrosserie du véhicule (6) et un rail de guidage arrière (10) dans la direction de fermeture (s) s'étend approximativement parallèlement à une surface latérale plus grande (19) de la première porte de véhicule (2) dans la position de fermeture dans une portion arrière (20) dans la direction de fermeture (s), et **en ce que** les éléments de renforcement (13, 14) peuvent être amenés dans une position fonctionnelle l'un contre l'autre lors de l'introduction d'une collision latérale contre les portes de véhicule (2, 3), dans laquelle position fonctionnelle les éléments de renforcement (13, 14) coopèrent en transmettant des forces pour le renforcement des régions de raccordement (7) et d'une transition entre les régions de raccordement (7).

2. Système de porte de véhicule selon la revendication 1,
**caractérisé en ce que**
les éléments de renforcement (13, 14) s'appliquent l'un contre l'autre par engagement par force et/ou par correspondance de forme dans la position fonctionnelle perpendiculairement à un côté extérieur des portes de véhicule (2, 3) dans la direction Y (y) et/ou dans et/ou à l'encontre de la direction de fermeture (s).

3. Système de porte de véhicule selon la revendication 1 ou 2,
**caractérisé en ce que**
les éléments de renforcement (13, 14) sont disposés dans une portion centrale des côtés frontaux de raccordement (8) par rapport à l'étendue longitudinale des côtés frontaux de raccordement (8) et en regard l'un de l'autre dans la position de repos.

4. Système de porte de véhicule selon l'une quelconque des revendications 1 à 3,
**caractérisé en ce que**
les éléments de renforcement (13, 14) présentent des profilés en section transversale qui sont appropriés pour un engagement efficace l'un dans l'autre des éléments de renforcement (13, 14) dans la position fonctionnelle.

5. Système de porte de véhicule selon la revendication 4,
**caractérisé en ce que**
les profilés en section transversale présentent à chaque fois au moins un crochet (15) formé d'une branche (16) et d'une branche transversale (17) disposée de manière inclinée par rapport à la branche (16) du côté de l'extrémité de la branche avec des surfaces latérales de branche (18), dans la position de fermeture des portes de véhicule (2, 3), la branche transversale (17) du premier élément de renforcement (13) étant disposée à l'écart de l'habitacle de conduite (5) ou essentiellement à l'écart de l'habitacle de conduite (5) et la branche transversale (17) du deuxième élément de renforcement (14) étant disposée vers l'habitacle de conduite (5) ou essentiellement vers l'habitacle de conduite (5) et les crochets (15) étant disposés de manière à se chevaucher dans la position de fermeture.

6. Système de porte de véhicule selon la revendication 5,
**caractérisé en ce que**
la branche (16) et la branche transversale (17) des crochets (15) sont réalisées à chaque fois à angle droit l'une par rapport à l'autre et **en ce que** la branche transversale (17) est disposée approximativement perpendiculairement au côté extérieur de la porte de véhicule (2, 3) qui lui est associée.

7. Système de porte de véhicule selon la revendication 5 ou 6,
**caractérisé en ce que**
les portes de véhicule (2, 3) présentent à chaque fois deux tôles de carrosserie entourant une cavité (23), une tôle extérieure (21) et une tôle intérieure (22), lesquelles sont reliées l'une à l'autre au moins au niveau des côtés frontaux de raccordement (8) sous forme de brides de raccordement (24) à l'extérieur de la cavité (23), et **en ce que** les brides de raccordement (24) forment le crochet respectif (15) ou au moins la branche transversale (17) de celui-ci de la porte de véhicule associée (2, 3).

8. Système de porte de véhicule selon la revendication 7,
**caractérisé en ce que**
les tôles de carrosserie (21, 22) sont renforcées au moins dans la région des éléments de renforcement (13, 14).

9. Système de porte de véhicule selon l'une quelconque des revendications 1 à 8,
**caractérisé en ce que**
la protection contre les collisions (12) comprend un troisième élément de renforcement en forme de barre (26) qui est disposé le long du côté frontal de raccordement (8) de la première porte de véhicule (2) et/ou de la deuxième porte de véhicule (3).

10. Système de porte de véhicule selon la revendication 9,
**caractérisé en ce que**
le premier et/ou le deuxième élément de renforcement (13, 14) sont fixés sur le troisième élément de renforcement (26) associé respectivement à leur porte de véhicule (2, 3).

11. Système de porte de véhicule selon la revendication 9 ou 10,
**caractérisé en ce que**
le troisième élément de renforcement (26) est fabriqué au moins en partie en polyamide, en plastique renforcé par des fibres de verre ou en plastique renforcé par des fibres de carbone.

12. Système de porte de véhicule selon l'une quelconque des revendications 1 à 11,
**caractérisé en ce que**
les deux portes de véhicule (2, 3) sont réalisées sous forme de portes coulissantes (Sb) qui peuvent être déplacées au moyen de rails de guidage (9) à chaque fois sur une voie de coulissement non linéaire (w) par rapport à la carrosserie du véhicule (6), un deuxième rail de guidage (10) pour la deuxième porte de véhicule (3), arrière dans la direction de fermeture (s) de la deuxième porte de véhicule (3), s'étendant dans une portion (20) arrière dans la direction de fermeture (s) de la deuxième porte de véhicule (3) sur une plus grande partie de la distance vers l'habitacle de conduite (5).

13. Système de porte de véhicule selon la revendication 12,
**caractérisé en ce que**
le premier élément de renforcement (13) est disposé sur la première porte coulissante (Sb) et le deuxième élément de renforcement (13) est disposé sur la deuxième porte coulissante (Sb).

14. Système de porte de véhicule selon l'une quelconque des revendications 1 à 11,
**caractérisé en ce que**
la deuxième porte de véhicule (3) est réalisée sous forme de porte pivotante (Sw), qui est fixée sur une partie de châssis de la carrosserie du véhicule (6) de manière à pouvoir pivoter autour d'un axe de pivotement (a) perpendiculairement à une direction de fermeture par pivotement (sw).

15. Système de porte de véhicule selon la revendication 14,
**caractérisé en ce que**
le premier élément de renforcement (13) est disposé sur la porte coulissante (Sb) et le deuxième élément de renforcement (14) est disposé sur la porte pivotante (Sw).
